# EUROPÄISCHE PATENTANMELDUNG

(11) **EP 1 213 516 A1**
(43) Veröffentlichungstag der Anmeldung: **12.06.2002**
(21) Anmeldenummer: 00126900.0
(22) Anmeldetag: 08.12.2000
(51) Int. Cl.: F16J 15/34

(54) **Gleitringdichtung**

(71) Anmelder: M.E.F. Financing Establishment, 9491 Ruggell (LI)
(72) Erfinder: Scrivener, Peter, 6764 Lech am Arlberg (AT)
(74) Vertreter: Selting, Günther, Dipl.-Ing.

(57) **Zusammenfassung**

Die Gleitringdichtung für hohe Drücke weist einen stationären Gleitring (18) und einen mit einer Welle (12) rotierenden Gleitring (19) auf. Die Gleitringe (18, 19) werden von einer Federvorrichtung (23) gegeneinander gedrückt. Die Sekundärabdichtung der Gleitringe zu dem jeweils stützenden Teil (10 bzw. 12) erfolgt durch O-Ringe (21, 36). Die Gleitringe (18, 19) sind von einem Halterungsring (25) umgeben, der eine Federvorrichtung (23) enthält. Der Halterungsring (25) und die Federvorrichtung (23) sind stationär. Dies hat zur Folge, dass etwaige Ungenauigkeiten der Dichtungen und des Aggregats bei der Wellendrehung weniger häufig ausgeglichen werden müssen, wodurch die Belastung der Federvorrichtung verringert ist.

## Beschreibung

Die Erfindung betrifft eine Gleitringdichtung mit einem stationären Gleitring und einem rotierenden Gleitring, die mit gegeneinandergedrückten Gleitflächen aneinanderliegen.

Gleitringdichtungen haben den Vorteil einer hohen Druckdichtigkeit bei geringem Verschleiß. Sie werden häufig zum Abdichten von Wellendurchführungen durch Behälter, die Flüssigkeit enthalten, benutzt.

Besonders hohe Anforderungen werden an die Dichtungen von CO₂-Kompressoren im Kraftfahrzeugbereich gestellt. Solche Dichtungen müssen hohen Drücken bis 100 bar und hohen Drehzahlen mit 10.000 Upm standhalten.

Eine Gleitringdichtung, von der der Oberbegriff des Patentanspruchs 1 ausgeht, ist beschrieben in EP 1 024 319 A2.

Diese Gleitringdichtung hat einen stationären Gleitring und einen rotierenden Gleitring. Jeder der beiden Gleitringe ist mit demjenigen Teil, an dem er drehfest angebracht ist, durch einen O-Ring verbunden. Die Federvorrichtung ist mitrotierend an der Welle angeordnet, wobei sie gegen den rotierenden Gleitring drückt. Der stationäre Gleitring ist in einem Halterungsring angeordnet, der seinerseits an der feststehenden Wand abgestützt ist. Dabei ist ein weiterer O-Ring zwischen dem Halterungsring und der Wand vorgesehen. Diese Gleitringdichtung ist von dynamischer Bauweise, bei der die Federvorrichtung mit der Welle rotiert. In einer dynamischen Anordnung werden Ungenauigkeiten der Dichtungen und des Aggregates durch die Federn pro Umdrehung zweimal durch eine axiale Bewegung kompensiert.

Der vorliegenden Erfindung liegt die Aufgabe zugrunde eine Gleitringdichtung zu schaffen, die den Anforderungen an CO₂ Kompressoren entspricht und von einfachem Aufbau und hoher Lebensdauer ist.

Die Lösung dieser Aufgabe erfolgt erfindungsgemäß mit den im Anspruch 1 angegebenen Merkmalen. Hiernach sind bei der erfindungsgemäßen Gleitringdichtung die Sekundärdichtungen zwischen dem jeweiligen Gleitring und seinem abstützenden Teil als O-Ringe ausgebildet, die im Stande sind hohe Drücke abzudichten. Ferner sind der Haltering und die Federvorrichtung stationär. Bei einer stationären Federvorrichtung erfolgt der Ausgleich von Ungenauigkeiten der Dichtungen und des Aggregats durch die Federvorrichtung nur einmalig. Danach steht die Dichtung still. Wegen der geringeren Belastung der Federvorrichtung ist die Lebensdauer der Gleitringdichtung verlängert. Insbesondere eignet sich die Gleitringdichtung für Wellen, die mit hoher Drehzahl rotieren. Der stationäre O-Ring ist von dem stationären Gleitring umschlossen. Er sitzt auf einem ringförmigen Vorsprung der Wand, welcher den Wellendurchgang durch die Wand umgibt. Der stationäre Gleitring kann die Federvorrichtung auf seinem Außenumfang tragen, während er innen gegen die Wand abgedichtet ist.

Der Halterungsring bildet eine Patrone, die den stationären und den rotierenden Gleitring aufnimmt. Diese Patrone kann als Ganzes in ein Gehäuse eingebaut werden, um anschließend die Welle durch die Gleitringdichtung hindurchzuschieben. Die Welle drückt dann den rotierenden Gleitring axial gegen den stationären Gleitring, wodurch der rotierende Gleitring von dem zugehörigen Anschlag des Halterungsrings abhebt. Die Gleitringdichtung gleicht einen geringfügigen Versatz oder Fehlausrichtungen des Aggregates aus. Sie besteht aus wenigen Komponenten und ist kleinformatig herstellbar. Sämtliche Komponenten der Gleitringdichtung können vormontiert werden, so dass die Gleitringdichtung als Ganzes nach Art einer Patrone in das Gehäuse, das den Wellendurchgang aufweist, eingesetzt werden kann.

Von Bedeutung ist auch das Merkmal der stationären Federvorrichtung. Dadurch wird eine hohe Sicherheit der Dichtungsfunktion gegenüber Toleranzen und Vibrationen erreicht. Bei dynamischen Konstruktionen, bei denen die Federvorrichtung mit der Welle rotiert, müssen Toleranzen bei jeder Umdrehung axial zweimal ausgeglichen werden, was bei hohen Drehzahlen zu einer sehr großen Zahl von Lastspielen führen kann, durch die die Dichtungen leichter ihre Funktionsfähigkeit verlieren.

Die erfindungsgemäße Gleitringdichtung eignet sich insbesondere für den Einsatz in CO₂-Kompressoren bei hohen Drücken bis 100 bar und hohen Drehzahlen bis 10.000 Upm.

Gemäß einer bevorzugten Ausführungsform der Erfindung besteht der Halterungsring aus einem Blechteil oder anderen Metallteil, welches eine den stationären Gleitring und die Federvorrichtung umgebende Hülse und davon abstehende, den rotierenden Gleitring umgreifende Arme aufweist. Die Hülse hat die Funktion, eine Patronenmontage zu gewährleisten. Ein Ausmessen, Montieren und Justieren ist beim Einbau der Dichtung nicht erforderlich.

Vorzugsweise ist der rotierende Gleitring mit einer dem stationären Gleitring abgewandten Ringfläche versehen, an der ein elastischer Dämpfungsring anliegt. Nach dem Einbau der Dichtung drückt die Welle gegen den Dämpfungsring und dieser drückt seinerseits gegen den rotierenden Gleitring. Der Dämpfungsring hat die Aufgabe, einen direkten Schulterkontakt des rotierenden Gleitringes mit der Welle zu vermeiden. Durch den Dämpfungsring wird verhindert, dass Vibrationen und Laufunruhen der Welle direkt auf die Gleitringe übertragen werden. Dadurch wird eine größere Laufruhe erzeugt und es werden Schwingungen von den Gleitflächen ferngehalten, was die Lebensdauer verlängert.

Im folgenden werden unter Bezugnahme auf die Zeichnungen Ausführungsbeispiele der Erfindung näher erläutert.

Es zeigen:
- Fig. 1.: einen Längsschnitt durch die als Wellendichtung in ein Kompressorgehäuse eingesetzte Gleitringdichtung, und
- Fig. 2: eine Teildarstellung eines zweiten Ausführungsbeispiels der Gleitringdichtung.

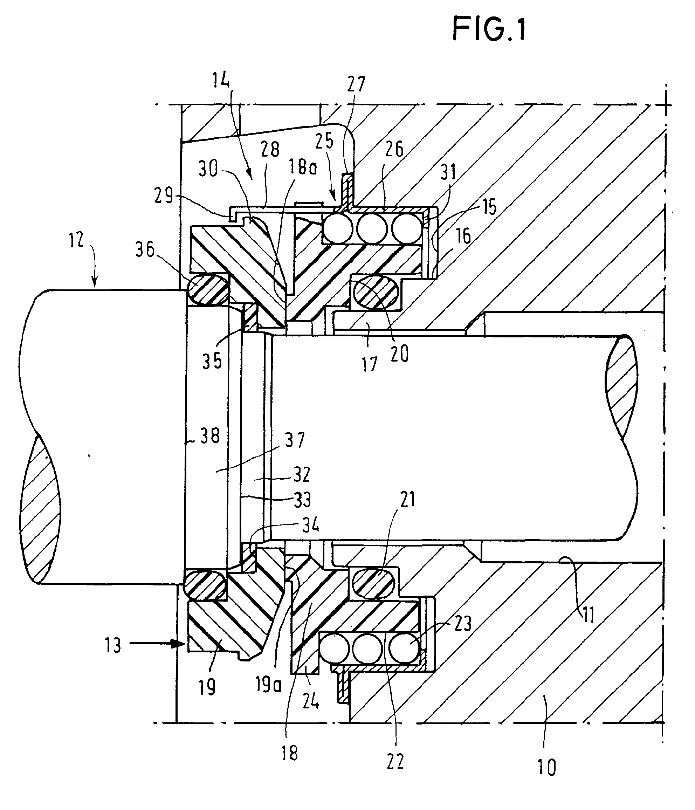

Gemäß Fig. 1 weist die Wand 10 eines Kompressorgehäuses einen Wellendurchgang 11 auf, durch den eine rotierende Welle 12 hindurchführt. Der Druckraum des Kompressorgehäuses ist mit 13 bezeichnet. Die Gleitringdichtung 14 dient zur Abdichtung des Wellendurchgangs 11. Sie ist in einer den Wellendurchgang 11 ringförmig umgebenden Ausnehmung 15 montiert. Diese Ausnehmung ist an ihrer Innenseite mit einem Stufenabsatz 16 versehen und sie weist druckseitig von dem Stufenabsatz 16 eine die Welle umschließende ringförmige Innenwand 17 auf.

Zu der Gleitringdichtung gehören der stationäre Gleitring 18 und der rotierende Gleitring 19. Die beiden Gleitringe haben gegeneinanderliegende radiale Gleitflächen 18a bzw. 19a. Die Gleitringe bestehen aus Materialien hoher Abriebfestigkeit. Vorzugsweise wird eine Materialpaarung aus Siliziumkarbid gegen Wolframkarbid benutzt. Beide Gleitringe bestehen aus einem Massiv-Gleitflächenmaterial. Die massive Ausführung gewährt den Vorteil des spannungsfreien Einsatzes und der wirtschaftlichen Fertigung.

Der stationäre Gleitring 18 weist an seiner Innenseite eine Ausnehmung 20 auf, die die Innenwand 17 umgibt und in der sich ein O-Ring 21 befindet, der zwischen dem Gleitring 18 und der Innenwand 17 radial zur Welle 12 komprimiert wird.

Auf einer Umfangsfläche 22 des Gleitringes 18 sitzt eine Federvorrichtung 23 in Form einer Schraubenfeder. Diese Federvorrichtung drückt gegen einen radialen Flansch 24 des Gleitringes 18, um die Gleitflächen 18a und 19a gegeneinander zu drücken.

Die Federvorrichtung 23 ist von einem Halterungsring 25 umschlossen, und zwar von einer zylindrischen Hülse 26 dieses Halterungsrings. Er weist einen Flansch 27 auf, der sich gegen den Rand der Ausnehmung 15 legt und somit die Gleitringdichtung positioniert. Von der Hülse 26 erstrecken sich Arme 28 in axialer Richtung. Diese Arme haben jeweils am Ende einen nach innen gewinkelten Anschlag 29, der einen Ringflansch 30 des rotierenden Gleitrings hintergreift. Am entgegengesetzten Ende weist der Halterungsring 25 einen nach innen abgewinkelten Anschlag 31 auf, welcher die Federvorrichtung 23 axial abstützt. Der Halterungsring 25 hält also die Komponenten der Gleitringdichtung zusammen. Die Federvorrichtung 23 drückt die Gleitflächen 18a,19a gegeneinander und treibt somit den Ringflansch 30 gegen die Anschläge 29.

Auf einem Stufenabsatz 32 der Welle 12 sitzt ein Dämpfungsring 35 aus elastischem Material, der zwischen einer Stirnfläche 33 der Welle 12 und einer Ringfläche 34 des Gleitringes 19 sitzt. Die Welle 12 drückt über den Dämpfungsring 35 gegen den Gleitring 19 und dieser drückt seinerseits gegen den Gleitring 18, welcher unter der Wirkung der Federvorrichtung 23 zurückweicht. Dadurch kommt der Flansch 30 des Gleitringes 19 von dem Anschlag 29 des Halterungsrings 25 frei. In einer Ausnehmung an der Innenseite des Gleitringes 19 sitzt ein O-Ring 36, der auf einem Stufenabsatz 37 der Welle 12 radial komprimiert wird. Außerdem wird der Dichtungsring zwischen einer Stirnwand 38 der Welle und dem Gleitring 19 axial komprimiert. Der Dichtungsring wird als Elastomer zusammengepreßt und erhöht dadurch die Dichtigkeit und auch die Mitnahme zwischen der Welle 12 und dem rotierenden Gleitring 19. Der Dämpfungsring 35, dessen Elastizität geringer ist als diejenige des O-Rings 36, hat die Aufgabe, zu vermeiden, dass der rotierende Gleitring 19 in direkten Schulterkontakt mit der Welle 12 kommt. Dadurch wird vermieden, dass Vibrationen und Laufunruhen der Welle direkt auf die Gleitringe übertragen werden.

Der Halterungsring 25 hält die Dichtungsteile mit der Spannung der Federvorrichtung 23 zusammen, so dass beim Transport und Einbau keine Schmutzteile zwischen die Gleitflächen 18a,19a kommen können. Nachdem die Gleitringdichtung als Patrone in die Wand 10 eingebaut ist, kann die Welle 12 durch die Patrone geschoben oder gesteckt werden, wobei die Gleitringdichtung mit der Federvorrichtung unter korrekte Vorspannung kommt. Dabei hebt sich der Ringflansch 30 von dem Anschlag 29 ab, so dass die Dichtung anschließend funktionsfähig ist.

Die Gleitringdichtung ist insbesondere für CO₂-Kompressoren von Klimaanlagen, die mit dem umweltfreundlichen CO₂-Gas betrieben werden, bestimmt.

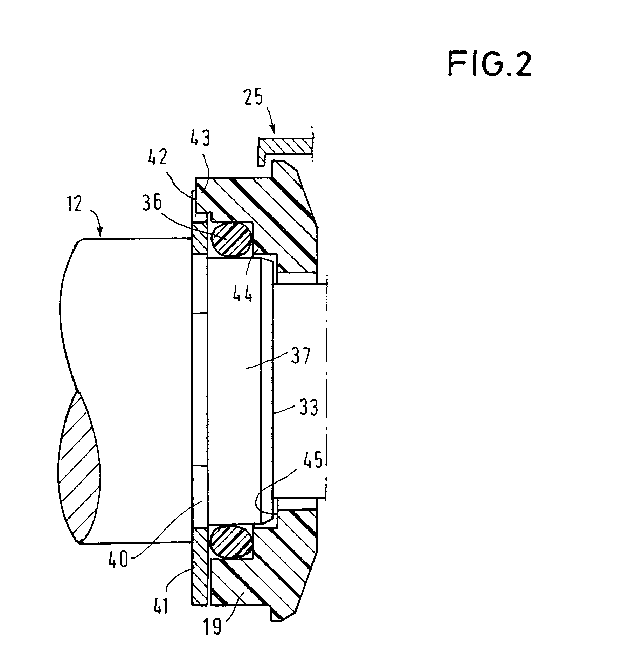

Das Ausführungsbeispiel der Fig. 2 gleicht weitgehend demjenigen von Fig. 1, so dass die nachfolgende Beschreibung sich auf die Erläuterung der Unterschiede beschränkt.

Gemäß Fig. 2 ist die Welle 12 angrenzend an den Stufenabsatz 37 mit einem Mitnahmeprofil 40 versehen, das als Sechskant oder Achtkant ausgebildet ist. Auf diesem Mitnahmeprofil 40 sind ein passender Mitnahmering 41, welcher an seinem Umfang eine Aussparung 42 aufweist, die mit einem Ansatz 43 des Gleitrings 19 zusammengreift. Der O-Ring 36 liegt einerseits an der Radialfläche 44 des Gleitrings 19 und andererseits an der Stirnfläche des Mitnahmerings 41 an. Der Mitnahmering 41 bewirkt eine drehfeste Kopplung des Gleitrings 19 mit der Welle 12. Dies hat zur Folge, dass der O-Ring 36 nicht mehr zur Drehmitnahme genutzt wird sondern ausschließlich als Dichtungselement wirkt. Dadurch entfällt auch der Dämpfungsring 35 des ersten Ausführungsbeispiels. Der rotierende Gleitring 19 drückt auch bei stärkerem axialem Druck nur gegen den O-Ring 36, wobei die Abmessungen so vorgesehen sind, dass die Schulter 45 des Gleitrings stets einen Abstand von der Stirnfläche 33 der Welle 12 hat. Damit ist eine in axialer Richtung elastische Lagerung gewährleistet.

## Patentansprüche

1. Gleitringdichtung für hohe Drücke, mit einem stationären Gleitring (18) und einem mit einer Welle (12) rotierenden Gleitring (19), die mit gegeneinandergedrückten Gleitflächen (18a,19a) aneinanderliegen, einer Federvorrichtung (23) zum Gegeneinanderdrücken der Gleitringe (18,19), einen die Gleitringe (18,19) umgebenden Halterungsring (25), der einen ersten Anschlag (31) zum Abstützen der Federvorrichtung (23) und einen zweiten Anschlag (29) zum Rückhalten eines (19) der Gleitringe aufweist, einem ersten O-Ring (21) zwischen einer Wand (10) und dem stationären Gleitring (18) und einem zweiten O-Ring (36) zwischen der Welle (12) und dem rotierenden Gleitring (19),
**dadurch gekennzeichnet,**
**dass** der Halterungsring (25) und die Federvorrichtung (23) stationär sind, und dass der erste O-Ring (21) von dem stationären Gleitring (18) umschlossen ist.

2. Gleitringdichtung nach Anspruch 1, **dadurch gekennzeichnet, dass** der Halterungsring (25) aus einem Metallteil besteht, welches eine den stationären Gleitring (18) und die Federvorrichtung (23) umgebende Hülse (26) und davon abstehende, den rotierenden Gleitring (19) umgreifende Arme (28) aufweist.

3. Gleitringdichtung nach Anspruch 1 oder 2, **dadurch gekennzeichnet, dass** der rotierende Gleitring (19) eine dem stationären Gleitring (18) abgewandte Ringfläche (34) aufweist, an der ein elastischer Dämpfungsring (35) anliegt.

4. Gleitringdichtung nach einem der Ansprüche 1-3, **dadurch gekennzeichnet, dass** der Halterungsring (25) einen radialen Flansch (27) zur Positionierung an dem Rand einer Ausnehmung (15) einer Gehäusewand (10) aufweist.

5. Gleitringdichtung nach einem der Ansprüche 1-4, **dadurch gekennzeichnet, dass** die Federvorrichtung (23) den stationären Gleitring (18) umgibt.

6. Gleitringdichtung nach einem der Ansprüche 1 - 5, **dadurch gekennzeichnet, dass** die Wand (10) eine den Wellendurchgang umgebende ringförmige Ausnehmung (15) aufweist, die im wellennahen Bereich durch einen ringförmigen Vorsprung (17) begrenzt ist, welche einen Sitz für den ersten O-Ring (21) bildet.

7. Gleitringdichtung nach einem der Ansprüche 1 - 6, **dadurch gekennzeichnet, dass** der zweite O-Ring zwischen dem rotierenden Gleitring (19) und einem drehfest mit der Welle (12) und dem rotierenden Gleitring (19) verbundenen Mitnahmering (41) enthalten ist und einen axialen Puffer für den rotierenden Gleitring (19) bildet.
